# EUROPÄISCHE PATENTSCHRIFT

(11) **EP 4 013 969 B1**
(45) Veröffentlichungstag und Bekanntmachung des Hinweises auf die Patenterteilung: **02.08.2023**
(21) Anmeldenummer: 20820898.3
(22) Anmeldetag: 07.12.2020
(51) Int. Cl.: F16B 12/10

(54) **ANZUGELEMENT**
TIGHTENING ELEMENT
ÉLÉMENT DE SERRAGE

(30) Priorität: 09.12.2019 DE 202019106844 U
(43) Veröffentlichungstag der Anmeldung: 22.06.2022
(73) Patentinhaber: Häfele Berlin GmbH & Co KG, 12307 Berlin (DE)
(72) Erfinder: BIRKNER, Robert, 12524 Berlin (DE); LEISTERT, Peer, 15566 Schöneiche (DE)
(74) Vertreter: Kohler Schmid Möbus Patentanwälte
(86) Internationale Anmeldenummer: PCT/EP2020/084895
(87) Internationale Veröffentlichungsnummer: WO 2021/116021

(56) Entgegenhaltungen:
- WO-A1-03/093688
- US-A1- 2009 080 969
- US-A1- 2009 123 222

## Beschreibung

Die Erfindung betrifft ein Anzugelement zum werkzeuglosen Anziehen eines Eckverbinders für Teile, insbesondere Möbelplatten, gemäß Oberbegriff von Anspruch 1. Bei dem anzuziehenden Eckverbinder handelt es sich beispielsweise um einen HÄFELE Minifix-Bolzen.

Ein derartiges Anzugelement ist beispielsweise durch US 2009/123222 A1 bekannt geworden.

US 2009/123222 A1 offenbart ein Anzugelement zum werkzeuglosen Anziehen eines Eckverbinders für zwei Möbelplatten. Das Anzugelement umfasst einen Hebelarm und einen Zapfen, dessen Achse senkrecht zur Hebelrichtung verläuft. Der Zapfen weist eine offene Aussparung auf, in die ein Kopf des Eckverbinders einführbar ist und deren Innenseite eine exzentrische Anzugskontur auf, die ausgebildet ist, beim Drehen des Zapfens um seine Achse den Kopf des Eckverbinders zu hintergreifen und anzuziehen. Die Aussparung ist senkrecht (also radial) zur Zapfenachse offen und weist an ihrer Innenseite die Anzugskontur auf.

Aus der DE 20 2019 101 077 U1 ist ein Eckverbinder bekannt, der in eine stirnseitige Bohrung einer ersten Möbelplatte oder in eine flächenseitige Bohrung einer zweiten Möbelplatte vorgesteckt wird. Nach dem Verbinden der Möbelplatten wird der Eckverbinder angezogen, so dass er in eine gespreizte Stellung gebracht wird und die Möbelplatten fugenfrei verbunden werden.

Der vorliegenden Erfindung liegt die Aufgabe zugrunde, ein Anzugelement zur Verfügung zu stellen, mit dem das Anziehen eines Eckverbinders einfach und effizient erfolgen kann.

Die Aufgabe wird erfindungsgemäß durch ein Anzugelement zum werkzeuglosen Anziehen eines Eckverbinders für Teile, insbesondere Möbelplatten, mit den Merkmalen von Anspruch 1 gelöst. Die Form der Ausnehmung des Zapfens bildet dabei die Anzugskontur an der Innenseite des Zapfens. Die Anzugskontur ist so ausgebildet, dass sie einen Umfang aufweist, der den Zapfenkopf hintergreift. Der Umfang wird in Drehrichtung geringer, so dass durch die Kraft, die durch die Kontur auf den Kopf des Eckverbinders ausgeübt wird, dieser herangezogen wird und damit in der Bohrung des anderen Teils festgezogen werden kann. Der Schaft des Eckverbinders kann beim Drehen an der Nocke entlanggleiten. Durch das Entlanggleiten kann ein Nutzer des Anzugelements ein fühlbares, haptisches Feedback erhalten.

Durch ein solches Anzugelement, das in eine Bohrung in beispielsweise dem ersten Teil der beiden zu verbindenden Teile eingesteckt werden kann, kann ein in einer Bohrung des zweiten Teils vorgesteckter Eckverbinder einfach und werkzeuglos angezogen werden und damit das erste Teil mit dem zweiten Teil fugenlos verbunden werden. Bei dem ersten Teil und dem zweiten Teil handelt es sich beispielsweise um zwei Möbelplatten, insbesondere einen Fachboden und eine Korpuswand, bei denen der Fachboden stirnseitig mit dem Korpus verbunden werden soll. Der Hebelarm dient als Hebel für die Drehung des Zapfens und hilft, die benötigte Kraft zum Anziehen des Eckverbinders aufzubringen. Wird der Kopf des Eckverbinders in die Ausnehmung des Zapfens in Richtung der Zapfenachse eingeführt und wird der Zapfen danach gedreht, so kann der Bolzenschaft des Eckverbinders in dem Schlitz aufgenommen werden. Dies ermöglicht die Drehung des Zapfens mit aufgenommenem Eckverbinder in besonders vorteilhafter Weise.

Bevorzugt ist das Anzugselement oder der zumindest der Zapfen symmetrisch zur mittigen Längsachse des hebelartigen Hauptkörpers ausgebildet, so dass das Anzugselement durch Drehen in jede der beiden möglichen Richtungen von der Aufsetzposition in die Anzugsposition überführt werden kann.

Die Erfindung betrifft auch eine Möbelanordnung mit zwei Möbelteilen, mit einem Eckverbinder, der in einer Bohrung des zweiten Teils verankert ist und sich mit einem Bolzenkopf in eine stirnseitige Bohrung des ersten Teils erstreckt, und mit einem wie oben ausgebildeten Anzugselement, das in einer Ausgangsdrehposition mit seinem Zapfen in eine Bohrung des ersten Teils eingesetzt ist und aus der Ausgangsdrehposition durch eine Drehung, insbesondere eine 90°-Drehung, um die Zapfenachse in eine Anzugsposition überführbar ist, in der der Kopf des Eckverbinders durch eine Anzugskontur des Zapfens hintergriffen und weiter ins Zapfeninnere gezogen ist.

In seiner Ausgangsdrehposition ist das Anzugelement auf den Kopf des Eckverbinders aufsetzbar, indem der Kopf des Eckverbinders in der Aufsetzposition in die Ausnehmung des Zapfens eingeführt wird. Das Aufsetzen erfolgt bevorzugt dadurch, dass der Zapfen in eine Bohrung eingeführt wird, in der der Kopf des Eckverbinders zugänglich ist. Von der Ausgangsdrehposition kann das Anzugelement durch Drehen in eine Anzugsposition überführt werden. Bevorzugt erfolgt die Überführung von der Aufsetzposition in die Anzugsposition durch eine Drehung um 90°. Der Schlitz des Zapfens kann während der Drehung und in der Anzugsposition den Schaft des Eckverbinders aufnehmen. Die Anzugsposition ist geeignet, den Kopf des Eckverbinders zu hintergreifen und anzuziehen.

In der Ausgangsdrehposition verläuft die Längsachse des hebelartigen Hauptkörpers bevorzugt längs der Längsachse des Schaftes des Eckverbinders und in der Anzugsposition verläuft die Längsachse des hebelartigen Hauptkörpers bevorzugt quer, z. B. senkrecht, zur Längsachse des Schaftes des Eckverbinders.

Die Rastnocken sind so ausgebildet, dass sie in der Anzugsposition eine Aufnahme für den Bolzenschaft des Eckverbinders bilden und somit eine Verdrehsicherung gegen versehentliches Verdrehen bilden.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1d: ein erfindungsgemäßes Anzugselement in einer perspektivischen Ansicht (Fig. 1a), in einer Ansicht von unten (Fig. 1b), in einer Frontansicht (Fig. 1c) und in einer Seitenansicht (Fig. 1 d); und
- Fign. 2a-2c: die Montage des erfindungsgemäßen Anzugselements und eines Eckverbinders jeweils in einem Längsschnitt.

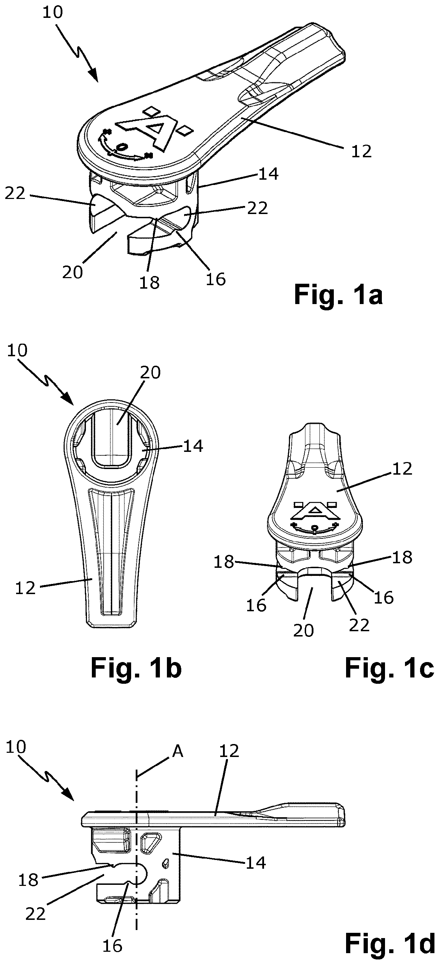

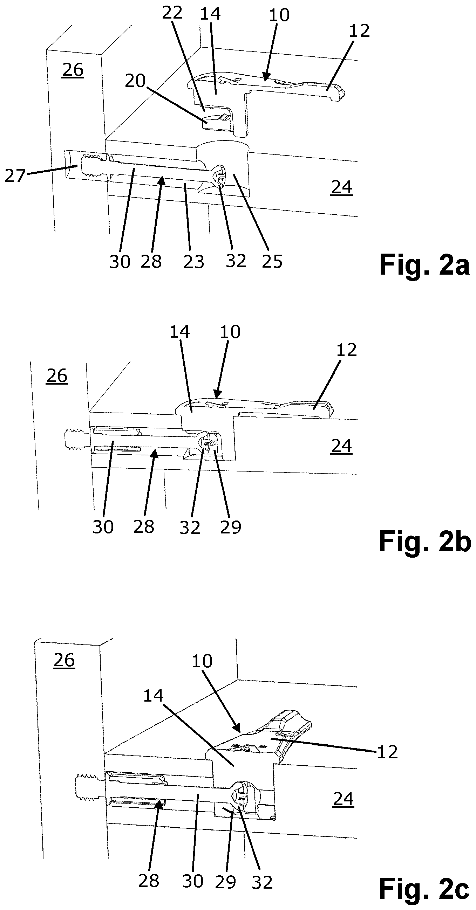

Das in **Fign. 1a-1d** gezeigte Anzugselement **10** weist einen Hebelarm **12** und einen senkrecht vom Hebelarm 12 vorstehenden, zylindrischen Zapfen **14** auf. Der Zapfen 14 hat eine Einhüllende in Zylinderform und weist mehrere Aussparungen auf. Eine Aussparung **20** ist nach unten offen und verläuft in Richtung der Zapfenachse **A.** Die Aussparung 20 ist geeignet, einen Kopf **32** eines Eckverbinders **28** (**Fig. 2**) aufzunehmen. Ein von der Aussparung 20 beidseitig seitlich abgehender Schlitz **22** ist seitlich offen und verläuft in einer Richtung senkrecht zur Zapfenachse A und senkrecht zur Längsrichtung des Hebelarms 12. Der Schlitz 22 ist geeignet, einen Bolzenschaft **30** des Eckverbinders 28 aufzunehmen.

Der Schlitz 22 weist an seiner dem Hebelarm 12 zugewandten Seite eine längliche Rastnocke **18** und an seiner dem Hebelarm 12 abgewandten Seite eine längliche Rastnocke **16** auf. Die Rastnocken 16, 18 verlaufen parallel zueinander in einer Richtung senkrecht zur Zapfenachse A. Ihr Abstand ist bevorzugt so gewählt, dass der Bolzenschaft 30 des Eckverbinders 28 zwischen ihnen aufgenommen werden kann. Im dargestellten Beispiel ist die Rastnocke 16 innenliegend, d. h. näher an der Achse A des Zapfens 14, und die Rastnocke 18 außenliegend, d. h. näher der Außenseite des Zapfens 14, angeordnet. Die Anordnung der Rastnocken 16, 18 kann optional auch umgekehrt sein. In diesem Fall würde die Rastnocke 18 innenliegend sein und die Rastnocke 16 außenliegend. Die Breite der Ausnehmung 20 ist bevorzugt an die Größe des Kopfes 32 des Eckverbinders 28 angepasst. Beispielsweise handelt es sich bei dem Eckverbinder 28 um einen HÄFELE Minifix Eckverbinder.

In **Fign. 2a-2c** ist die Montage des Anzugselements 10 und des Eckverbinders 28 gezeigt, um ein erstes Teil 24, wie z.B. einen Fachboden 24 eines Möbels, an einem zweiten Teil 26, z.B. an einer Korpuswand des Möbels, zu befestigen. Der Eckverbinder 28 ist in einer Bohrung **27** des zweiten Teils 26 verankert und in eine stirnseitige Bohrung **23** des ersten Teils 24 vorgesteckt. Das erste Teil 24 weist eine Bohrung **25** auf, über die der Kopf 32 des Eckverbinders 28 zugänglich ist. Das Anzugelement 10 wird mit seinem Hebelarm 12 in einer Ausgangsdrehposition parallel zum Bolzenschaft 30 und fort vom Eckverbinder 28 ausgerichtet (Fig. 2a) und dann mit seinem Zapfen 14 voran in die Bohrung 25 eingesetzt, bis der Hebelarm 12 auf dem ersten Teil 24 aufliegt. Durch Drehen des Hebelarms 12 um 90° in die eine oder andere Richtung in eine Anzugsdrehposition wird der Zapfen 14 innerhalb der Bohrung 25 gedreht, wodurch der Kopf 32 des Eckverbinders 28 durch eine Anzugskontur **29** des Zapfens 14 hintergriffen und weiter ins Zapfeninnere gezogen wird, bis die Teile 24, 26 fugenfrei miteinander verbunden sind. In seiner Endstellung ist das Anzugselement 10 durch die beiden Nocken 16, 18 gesichert, die ein haptisches Feedback während des Anzuges, sowie eine Verdrehsicherung des Hebelarms 12 bewirken. Je nach Drehrichtung befindet sich der Bolzenschaft 30 in der einen oder anderen Hälfte des Schlitzes 22.

Das Anzugelement 10 ist flach ausgebildet, so dass es im aufgebauten Möbel nicht stört. Zugleich wird ermöglicht, das Möbel werkzeuglos und einfach wieder abzubauen. Der Hebelarm 12 des Anzugelements 10 kann beispielsweise auf einer Möbelplatte Anwendung finden, bevorzugt jedoch unterhalb der Platte, um die Stellfläche auf der Möbelplatte nicht einzuschränken.

## Patentansprüche

1. Anzugelement (10) zum werkzeuglosen Anziehen eines Eckverbinders (28) für Teile (24, 26), insbesondere Möbelplatten, mit einem Hebelarm (12) und mit einem Zapfen (14), dessen Achse (A) senkrecht zur Hebelrichtung verläuft, wobei der Zapfen (14) eine offene Aussparung (20) aufweist, in die ein Kopf (32) des Eckverbinders (28) einführbar ist und deren Innenseite eine Anzugskontur (29) aufweist, die ausgebildet ist, beim Drehen des Zapfens (14) um seine Achse (A) den Kopf (32) des Eckverbinders (28) zu hintergreifen und anzuziehen,
**dadurch gekennzeichnet,**
**dass** die Aussparung (20) in Achsrichtung des Zapfens (14) offen ist dass der Zapfen (14) senkrecht zu seiner Achse (A) einen von der Aussparung (20) ein- oder beidseitig abgehenden, seitlich offenen Schlitz (22) aufweist, in den ein Bolzenschaft (30) des Eckverbinders (28) einführbar ist, und dass der Schlitz (22) an seiner dem Hebelarm (12) zugewandten Seite und an seiner dem Hebelarm (12) abgewandten Seite jeweils eine längliche Rastnocke (16, 18) aufweist, wobei die beiden Rastnocken (16, 18) parallel zueinander in einer Richtung senkrecht zur Zapfenachse (A) verlaufen und wobei die eine, erste Rastnocke (16) näher an der Achse (A) des Zapfens (14) als die andere, zweite Rastnocke (18) angeordnet ist und die zweite Rastnocke (18) näher der Außenseite des Zapfens (14) als die erste Rastnocke (16) angeordnet ist.

2. Anzugelement nach Anspruch 1, **dadurch gekennzeichnet, dass** das Anzugelement (10) spiegelsymmetrisch zur Längsachse des Hebelarms (12) ist.

3. Möbelanordnung mit zwei Möbelteilen (24, 26), mit einem Eckverbinder (28), der in einer Bohrung (27) des zweiten Teils (26) verankert ist und sich mit einem Bolzenkopf (32) in eine stirnseitige Bohrung (23) des ersten Teils (24) erstreckt, und mit einem Anzugselement (10) nach einem der vorhergehenden Ansprüche, das in einer Ausgangsdrehposition mit seinem Zapfen (14) in eine Bohrung (25) des ersten Teils (24) eingesetzt ist und aus der Ausgangsdrehposition durch eine Drehung, insbesondere eine 90°-Drehung, um die Zapfenachse (A) in eine Anzugsposition überführbar ist, in der der Kopf (32) des Eckverbinders (28) durch eine Anzugskontur (29) des Zapfens (14) hintergriffen und weiter ins Zapfeninnere gezogen ist.

4. Möbelanordnung nach Anspruch 3, **dadurch gekennzeichnet, dass** der Hebelarm (12) in der Ausgangsdrehposition längs des Bolzenschafts (30) des Eckverbinders (28) verläuft.

5. Möbelanordnung nach Anspruch 3 oder 4, **dadurch gekennzeichnet, dass** der Hebelarm (12) in der Anzugsposition quer, bevorzugt senkrecht, zum Bolzenschaft (30) des Eckverbinders (28) verläuft.

6. Möbelanordnung nach einem der Ansprüche 3 bis 5, **dadurch gekennzeichnet, dass** in der Anzugsposition das Anzugselement (10) durch die mindestens eine Rastnocke (16, 18), insbesondere durch beide Rastnocken (16, 18), auf dem Bolzenschaft (30) des Eckverbinders (28) verdrehsicher verrastet ist.

## Claims

1. Tightening element (10) for tool-free tightening of a corner connector (28) for parts (24, 26), in particular furniture panels, comprising a lever arm (12) and a pin (14), the axis (A) of which runs perpendicular to the direction of the lever, wherein the pin (14) has an open recess (20) into which a head (32) of the corner connector (28) can be inserted and the inside of which has a tightening contour (29) which is designed to engage behind and tighten the head (32) of the corner connector (28) when the pin (14) is rotated about its axis (A), **characterized in**
**that** the recess (20) is open in the axial direction of the pin (14),
**that** the pin (14) has, perpendicular to its axis (A), a laterally open slot (22) extending on one or both sides from the recess (20), into which a bolt shaft (30) of the corner connector (28) can be inserted, and
**that** the slot (22) has on its side facing the lever arm (12) and on its side facing away from the lever arm (12) in each case an elongated locking cam (16, 18), wherein the two locking cams (16, 18) run parallel to one another in a direction perpendicular to the pin axis (A), and wherein one, first locking cam (16) is closer to the axis (A) of the pin (14) than the other, second locking cam (18), and the second locking cam (18) is arranged closer to the outside of the pin (14) than the first locking cam (16).

2. Tightening element according to claim 1, **characterized in that** the tightening element (10) is mirror symmetrical to the longitudinal axis of the lever arm (12).

3. Furniture arrangement with two furniture parts (24, 26), with a corner connector (28), which is anchored in a bore (27) of the second part (26) and extends with a bolt head (32) into an end-face bore (23) of the first part (24), and with a tightening element (10) according to one of the preceding claims, which in an initial rotational position is inserted with its pin (14) into a bore (25) of the first part (24) and can be transferred from the initial rotational position by a rotation, in particular a 90° rotation, about the pin axis (A) into a tightening position in which the head (32) of the corner connector (28) is engaged behind by a tightening contour (29) of the pin (14) and is drawn further into the interior of the pin.

4. Furniture arrangement according to claim 3, **characterized in that** the lever arm (12) extends in the initial rotational position along the bolt shaft (30) of the corner connector (28).

5. Furniture arrangement according to claim 3 or 4, **characterized in that** the lever arm (12) extends in the tightening position transversely, preferably perpendicularly, to the bolt shaft (30) of the corner connector (28).

6. Furniture arrangement according to one of claims 3 to 5, **characterized in that**, in the tightening position, the tightening element (10) is locked by the at least one locking cam (16, 18), in particular by both locking cams (16, 18), on the bolt shaft (30) of the corner connector (28) in a rotationally fixed manner.

## Revendications

1. Elément de serrage (10) dévolu au serrage sans outil d'une pièce (28) de solidarisation d'angle destinée à des parties constitutives (24, 26), notamment à des panneaux de meubles, comprenant un bras de levier (12) et un tenon (14) dont l'axe (A) s'étend perpendiculairement au levier, ledit tenon (14) étant muni d'un évidement ouvert (20) dans lequel une tête (32) de la pièce (28) de solidarisation d'angle peut être introduite, et dont la face intérieure présente un profil de serrage (29) conçu pour emprisonner par-derrière, et pour bloquer ladite tête (32) de la pièce (28) de solidarisation d'angle lors de la rotation dudit tenon (14) autour de son axe (A),
**caractérisé par le fait**
**que** l'évidement (20) est ouvert dans la direction axiale du tenon (14) ;
**que** ledit tenon (14) est pourvu, perpendiculairement à son axe (A), d'une fente (22) ouverte latéralement, qui part dudit évidement (20) sur un ou deux côté(s), et dans laquelle peut être insérée une tige (30) de boulon de la pièce (28) de solidarisation d'angle ; et
**que** ladite fente (22) est respectivement dotée d'une came allongée d'encliquetage (16, 18) sur son côté pointant vers le bras de levier (12), et sur son côté pointant à l'opposé dudit bras de levier (12), sachant que les deux cames d'encliquetage (16, 18) s'étendent parallèlement l'une à l'autre dans une direction perpendiculaire à l'axe (A) du tenon et sachant que l'une (16) des cames, ou première came d'encliquetage, est plus rapprochée dudit axe (A) du tenon que l'autre (18) desdites cames, ou seconde came d'encliquetage, et que ladite seconde came d'encliquetage (18) est plus rapprochée de la face extérieure dudit tenon (14) que ladite première came d'encliquetage (16).

2. Elément de serrage selon la revendication 1, **caractérisé par le fait que** ledit élément de serrage (10) présente une symétrie spéculaire par rapport à l'axe longitudinal du bras de levier (12).

3. Agencement de meuble comprenant deux parties (24, 26) dudit meuble, comportant une pièce (28) de solidarisation d'angle ancrée dans un alésage (27) de la seconde partie (26) et s'engageant, par une tête (32) de boulon, dans un alésage frontal (23) de la première partie (24), et un élément de serrage (10) conforme à l'une des revendications précédentes, qui est introduit par son tenon (14), en un premier emplacement de départ pris par rotation, dans un alésage (25) de ladite première partie (24) et qui peut être transposé à partir dudit emplacement de départ pris par rotation, sous l'effet d'une rotation, notamment d'une rotation de 90° autour de l'axe (A) du tenon, à un emplacement de blocage auquel ladite tête (32) de la pièce (28) de solidarisation d'angle est emprisonnée par-derrière par un profil de serrage (29) dudit tenon (14), et est insérée plus amplement dans l'espace interne dudit tenon.

4. Agencement de meuble selon la revendication 3, **caractérisé par le fait que** le bras de levier (12) s'étend, à l'emplacement de départ pris par rotation, le long de la tige (30) du boulon de la pièce (28) de solidarisation d'angle.

5. Agencement de meuble selon la revendication 3 ou 4, **caractérisé par le fait que** le bras de levier (12) s'étend, à l'emplacement de blocage, transversalement par rapport à la tige (30) du boulon de la pièce (28) de solidarisation d'angle, de préférence perpendiculairement.

6. Agencement de meuble selon l'une des revendications 3 à 5, **caractérisé par le fait que** l'élément de serrage (10) est encliqueté avec verrouillage rotatif sur la tige (30) du boulon de la pièce (28) de solidarisation d'angle, à l'emplacement de blocage, sous l'action de la came d'encliquetage (16, 18) à présence minimale, notamment sous l'action des deux cames d'encliquetage (16, 18).
